Europäisches Patentamt

European Patent Office

Office européen des brevets

(11) Publication number: **0 384 627**
**A1**

## EUROPEAN PATENT APPLICATION

(21) Application number: 90301470.2

(51) Int. Cl.⁵: **B23K 35/363**

(22) Date of filing: **12.02.90**

(30) Priority: **22.02.89 CA 591818**

(43) Date of publication of application:
**29.08.90 Bulletin 90/35**

(84) Designated Contracting States:
**CH DE FR GB LI NL SE**

(71) Applicant: **Jafri, Ashraf**
**114 Bowes Road, Unit no. 7**
**Concord, Ontario L4K 1J8(CA)**

(72) Inventor: **Jafri, Ashraf**
**114 Bowes Road, Unit no. 7**
**Concord, Ontario L4K 1J8(CA)**

(74) Representative: **Seaborn, George Stephen et al**
**c/o Edward Evans & Co. Chancery House**
**53-64 Chancery Lane**
**London WC2A 1SD(GB)**

(54) **Soldering flux compositions.**

(57) A soldering flux composition comprises a water-soluble oil-in-water emulsion in turn comprising:
(a) from about 1% to about 10% of an oil type material,
(b) from about 1% to about 20% of at least one non-ionic emulsifying agent;
(c) from about 40% to about 96% water; and
(d) from about 2% to about 35% of a fluxing agent capable of removing oxide from a metal surface to be soldered, all percentages being by weight.
For plumbing and certain mechanical fabrication applications, such a composition also usefully comprises up to 2% of a finely divided powdered metal such as tin, lead or alloys thereof with each other or with minor amounts of other metals such as copper.

EP 0 384 627 A1

## FORMULATIONS FOR SOLDERING FLUX

### FIELD OF INVENTION

The present invention relates to formulations for soldering flux suitable for use in soldering copper, nickel and copper alloys including nickel-copper alloys.

### BACKGROUND OF THE INVENTION

Fluxes for soldering metals are used in many different industries. Such fluxes come in paste and liquid forms and may actually be incorporated as a core in the solder itself.

Paste fluxes are used extensively in the plumbing industry. The carrier bases used in such paste fluxes are generally in the form of petroleum jelly (petroletta), petrolethum and natural or synthetic rosins. When such petroleum products are heated, they generate smoke which is hazardous to the user's health. They also have a number of other drawbacks for achieving a good soldering joint, for example, petroleum is greasy and is, therefore, non-wetting. Petroleum and resin burn and, therefore, present a fire hazard. Petroleum and resin (rosin) create smoke and are, therefore, unhealthy to breathe. They are not water-soluble and leave behind a residue which enhances corrosion. In soldering plumbing fixtures, such residues also cause contamination of drinking water passing through such plumbing fixtures. Additionally, petroleum products, resin and rosin bases are rough on the hands of the user presenting a further substantial health problem.

Liquid soldering fluxes are generally in the form of aqueous solutions of deoxidizing agents such as hydrochloric acid and zinc chloride. Such liquid fluxes are often used in metal fabricating operations. They present the serious disadvantage that the soldered products must be extensively rinsed to remove all flux residues. This in turn leads to the production of large quantities of acidic waste water which then require disposal. In the case of the use of fluxes containing inorganic acids, such as hydrochloric acid, such waste water is highly acidic and consequently presents a serious disposal problem.

In electronic applications, such as the soldering of printed circuit boards, highly corrosive liquid fluxes cannot be used because of the corrosive nature of the flux residues which are difficult to remove after the soldering operation is complete. Less corrosive liquid fluxes, for example, those containing organic acids as deoxidizing agents, have been proposed for such electronic applications but have still presented problems in ensuring adequate removal of all corrosive residues.

Additionally, in the soldering of printed circuit boards using known wave soldering machines, the solder is applied to the circuit board from a bath containing molten solder, the top surface of which is protected by a layer of oil to reduce dross formation. In practice, however, such oil gets transferred onto the printed circuit board from which it must then be completely removed. Such complete removal is difficult and generally requires the use of chlorinated or fluorinated organic solvents which are known to be extremely hazardous pollutants.

It is a principal object of this invention to provide new flux compositions which at least alleviate the above-noted deficiencies of the prior art formulations by being water-soluble, non-flammable and non-toxic. When heated, such flux compositions do not produce toxic substances, an unpleasant smell or irritating fumes.

It a further object of this invention to provide such compositions which are effective in lowering the cohesive force of the solder and which, therefore, assist in wetting the metal surfaces being soldered.

It is still a further object of this invention to provide a flux composition which can be formulated in a liquid or paste form.

Other objects of the invention will become apparent as the description herein proceeds.

### SUMMARY OF THE INVENTION

According to the present invention, there is provided a soldering flux composition comprising a fluxing agent capable of removing oxide from a metal surface to be soldered and characterized in that said composition comprises a water-soluble oil-in-water emulsion in turn comprising:
(a) from about 1% to about 10% by weight of an oil type material,

(b) from about 1% to about 20% by weight of at least one non-ionic emulsifying agent,

(c) from about 40% to about 96% by weight of water, and

(d) from about 2% to about 35% by weight of a fluxing agent capable of removing oxide from a metal surface to be soldered.

Such flux compositions can be prepared in liquid or paste form by appropriately selecting a suitable oil type material and appropriate relative proportions for the oil type material and the water.

In general, the flux compositions of this invention will normally comprise from about 10% to about 25% by weight of the fluxing agent.

The paste type compositions of this invention which are particularly useful in plumbing and metal fabrication applications will normally comprise from about 4% to about 6% by weight of the oil type material and from about 60% to about 80% by weight water.

On the other hand, the liquid type compositions of this invention which are valuable for use in metal fabricating and electronic applications will normally comprise from about 1% to about 2% by weight of the oil type material and from about 90% to about 96% by weight water.

A variety of oil type materials can be used in the compositions of this invention. Examples of suitable materials are mineral oils and waxes, vegetable and seed oils, animal and fish oils, petrolatum, waxes and petroleum jelly.

As previously indicated, non-ionic emulsifying agents are used to form the oil-in-water emulsions. Typical emulsifying agents are fatty acids such as stearic acid, fatty acid esters such as glyceryl monostearate and isopropyl palmitate and fatty alcohols such as cetyl alcohol, stearyl alcohol and cetearyl alcohol.

Many commercially available non-ionic emulsifying agents which can be used in the compositions of this invention are complex mixtures known under a variety of trade names.

There may be mentioned by way of example the emulsifying agents known under the trade names Promulgen DTM and Emulgade 1000 NITM which are complexes of C-16 to C-18 alcohols and their ethoxylates, Cerasynt SDTM which is glyceryl monostearate, Ameroxol OE-10TM, Glucate SSTM, Glucamate SSE-20TM, OhlanTM, and Solulan 98TM.

The water used in the compositions of this invention may be distilled, tap, or de-ionized, although distilled and de-ionized water are generally preferred.

The emulsifying agent or mixture of emulsifying agents will generally be present in an amount between about 6% to about 12% by weight in the paste-type compositions of this invention and between about 1% and about 2% by weight in the liquid-type compositions. The optimum amount of any particular emulsifying agent or agents to be used with any particular oil type material can of course easily be determined.

The fluxing agents used in the compositions of this invention include organic acids such as oleic acid and stearic acid, inorganic halides and organic halogen compounds. Examples of suitable inorganic halides are ammonium chloride, magnesium chloride, zinc chloride, zinc bromide, zinc iodide, sodium chloride, sodium bromide and potassium iodide. Suitable organic halogen compounds are various organic hydrochlorides, hydrobromides, and hydrofluorides, such as triethylamine hydrochloride.

From the viewpoints of cost and effectiveness, zinc chloride is the preferred fluxing agent for use in flux compositions for use in plumbing applications although the use of zinc bromide as the fluxing agent has been found to present some surprising practical advantages.

The compositions of the invention may also include preservatives such as menthyl paraban and propyl paraban and temperature stabilizers to enhance their shelf life. It has, however, been found that, when metallic halides such as zinc chloride or zinc bromide are used as the fluxing agents, such materials also act as preservatives. Therefore the addition of a separate preservative for the purpose of enhancing the shelf life of the composition is then not essential.

The compositions of the invention may also include emulsion stabilizers and humectants. Lanolin has been found to be effective for both purposes. Another suitable humectant is the material known under the trade name Glucam E-20TM which is understood to be a propoxylated methyl glucoside derivative.

In manufacturing the flux compositions of this invention, the oil type material and the emulsifying agent or agents are preferably combined to form an oil component. The water provides an aqueous component. Both components are preferably heated to a temperature of, for example, 60°C to 85°C, at which all the materials are liquid. The aqueous component is then slowly added to the oil component with mixing so as to form a stable emulsion.

The fluxing agent may be first added to the aqueous component or it may be added to the mixture of the aqueous components and the oil component during or subsequent to the mixing thereof.

The formulations according to the invention may be applied to the area to be soldered. The area may be cold or hot. The two components to be joined together may each be coated with the formulation using a brush or any other suitable means of application. Heat may then be applied and, when the temperature reaches the melting point of the solder, the solder is applied. The resultant joint is metallurgically sound, uniform and free of corrosion with no choking smoke, smell or fire occurring proximate the joint during the soldering process.

In accordance with another feature of this invention, it has been found that the addition of from about 0.5% to about 2% by weight of a finely divided powdered metal selected from the class consisting of tin, lead and alloys thereof with each other or with minor amounts of other metals such as copper greatly improves the lubrication of an unsoldered joint between parts being soldered so facilitating their adjustment into a desired relative orientation.

Such finely divided metal powders will normally have at least 70% by weight of their particles smaller than #325 mesh.

It has also been found that such optional use of finely divided tin or tin alloys is highly effective in reducing corrosion of the parts to be soldered by the flux composition prior to soldering.

When the liquid type flux compositions of this invention are used in metal fabricating operations such as in the soldering of automobile radiator cores, they may conveniently be applied by spraying or dipping. It has been found that, for such applications, it is possible to use with equal effectiveness flux compositions containing organic acids rather than the stronger inorganic acids as present in previously used flux compositions. After the soldering is complete, the flux residues are readily removed by rinsing with water and produce waste rinse waters which are less acidic and which, therefore, present less of a pollution problem than is the case with known fluxes containing inorganic acids such as hydrochloric acid.

In the use of the liquid flux compositions of this invention in electronic applications such as the soldering of printed circuit boards, such compositions leave residues which are readily removed by water washing so avoiding the use of chlorinated and fluorinated organic solvents as required in existing soldering operations. This is of considerable significance in view of the current concern about atmospheric pollution and damage to the ozone layer resulting from the atmospheric release of such materials. Additionally, the use of the flux compositions of this invention is advantageous in that it facilitates the removal of any oil residues which may have been transferred onto the circuit boards from the solder bath.

Other features of the invention and the advantages presented thereby will become apparent as the description herein proceeds.

## DESCRIPTION OF THE PREFERRED EMBODIMENTS

The invention will now be described merely by way of illustration in the following Examples in which, unless otherwise stated, all parts and percentages are by weight.

### Example 1

Component A and Component B were prepared by thoroughly mixing the materials identified below in the proportions indicated.

| Component A | |
| --- | --- |
| Ohlan | 1% |
| Ameroxol OE-10 | 2% |
| Solulan 98 | 3% |
| Cerasynt SD | 10% |
| Mineral oil | 10% |
| Component B | |
| Water | 57% |
| Zinc chloride | 15% |
| Triethanolamine | 2% |

Both components were heated to 60°C and Component B was slowly added to Component A with thorough mixing. The resulting mixture was then cooled to room temperature and homogenized by high speed mixing.

The final emulsion paste product was evaluated in the soldering of copper pipe using a solder containing 95.5% tin, 4% copper and 0.5% silver with very effective results. After the soldering operation was complete, the soldered joint was rinsed with water and no visible traces of flux then remained. After several weeks, there was no visible sign of corrosion or of green copper chloride at or around the soldered joint. If the soldered joint was not rinsed, green copper chloride eventually appeared around the soldered joint.

## Example 2

Component A and Component B were prepared by thoroughly mixing the materials identified below in the proportions indicated.

| Component A | |
|---|---|
| Glucate SS | 0.8% |
| Cetyl alcohol | 2.0% |
| Mineral oil | 6.0% |
| Stearic Acid | 2.0% |
| Component B | |
| Glucamate SSE-20 | 1.2% |
| Glucam E-20 | 5.0% |
| Water | 68.0% |
| Zinc chloride | 15% |

Both components were heated to 80°C and Component B was slowly added to Component A with thorough mixing. The resulting mixture was then cooled to 35°C and homogenized by high speed mixing.

The final emulsion paste product was evaluated in the same manner as described in Example 1 with equally good results.

## Examples 3 to 12

In each of these Examples, the products were prepared using Components A, B and C in the proportions indicated, the materials constituting the separate components being thoroughly mixed. Components A and B were then heated to a temperature of from about 80°C to about 85°C and Component B was gradually added to Component A with continuous stirring and mixing. The resultant mixture was then allowed to cool to about 40°C and Component C was slowly added thereto with continued stirring.

## Example 3

| Component A | |
|---|---|
| Mineral Oil | 6% |
| Stearyl alcohol | 5% |
| Gylceryl monostearate | 4% |
| Promulgen D | 2% |
| Component B | |
| Water | 73% |
| Component C | |
| Zinc chloride | 10% |

Example 4

| Component A | |
|---|---|
| Mineral Oil | 9% |
| Glyceryl monostearate | 6% |
| Cetearyl alcohol | 5% |
| Emulgade 1000 NI | 3% |
| Component B | |
| Water | 67% |
| Component C | |
| Zinc chloride | 10% |

The final emulsion paste products obtained in Examples 3 and 4 were evaluated in the same manner as described in Example 1 with equally good results.

Example 5

| Component A | |
|---|---|
| Mineral oil | 7% |
| Glyceryl stearate | 4% |
| Stearyl alcohol | 3% |
| Emulgade 1000 NI | 3% |
| Component B | |
| Water | 66% |
| Component C | |
| Zinc bromide | 17% |

When this particular emulsion paste product was evaluated in the manner described in Example 1, the deposits appearing around the soldered joint if it was not rinsed were less unsightly than was the case with the products containing zinc chloride as the fluxing agent.

Example 6

| Component A | |
|---|---|
| Mineral oil | 6% |
| Glyceryl monstearate | 5% |
| Promulgen D | 5% |
| Lanolin | 0.5% |
| Component B | |
| Water | 58.5% |
| Component C | |
| Zinc chloride | 23% |
| Tin powder | 2% |

The tin powder had a particle size distribution such that all particles were smaller than #150 mesh while about 98% passed through a #325 mesh sieve.

In evaluating the final emulsion paste product from this Example in the manner described in Example 1, it was found that the addition of the tin powder greatly improved the lubrication of the unsoldered joint between the parts being soldered so greatly facilitating their adjustment into a desired relative orientation.

It was also found that the tin powder was very effective in reducing corrosion of the unsoldered joint when compared to fluxes not containing such tin powder. The flux paste was applied to the joint to be soldered which was then left to stand at room temperature. No corrosion of the unsoldered joint was noted even after 30 days.

Example 7

| Component A | |
|---|---|
| Mineral oil | 6% |
| Glyceryl monstearate | 5% |
| Stearyl alcohol | 4% |
| Promulgen D | 3% |
| Lanolin anhydride | 0.5% |
| Propyl paraban | 0.05% |
| Component B | |
| Water | 61.4% |
| Menthyl paraban | 0.05% |
| Component C | |
| Zinc chloride | 18% |
| Tin/copper alloy powder | 2% |

The tin/copper alloy powder contained 97% tin and 3% copper and had a particle size specification such that all particles were smaller than #180 mesh and between 70% and 85% passed through a #325 mesh sieve.

In evaluating the final emulsion paste product from this Example in the manner described in Example 1, it was found that the addition of the tin/copper alloy powder greatly improved the lubrication of the unsoldered joint between the parts being soldered so greatly facilitating their adjustment into a desired relative orientation.

It was also found that the tin/copper powder was also effective in reducing corrosion of the unsoldered joint when compared to fluxes not containing such tin/copper alloy powder. The flux paste was applied to the joint to be soldered which was then left to stand at room temperature. No corrosion of the unsoldered joint was noted after 3 days.

Example 8

| Component A | |
| --- | --- |
| Mineral oil | 7% |
| Glyceryl monostearate | 5% |
| Promulgen D | 2.5% |
| Stearyl alcohol | 4% |
| Lanolin | 0.5% |
| Component B | |
| Water | 65% |
| Component C | |
| Zinc chloride | 14% |
| Tin/copper alloy powder | 2% |

The results obtained using this emulsion paste were essentially identical to those reported in Example 7.

Example 9

| Component A | |
| --- | --- |
| Mineral oil | 6% |
| Glyceryl monstearate | 5% |
| Stearyl alcohol | 4% |
| Promulgen D | 3% |
| Lanolin anhydride | 0.5% |
| Propyl paraban | 0.05% |
| Component B | |
| Water | 61.4% |
| Menthyl paraban | 0.05% |
| Component C | |
| Zinc chloride | 18% |
| Tin/lead alloy powder | 2% |

The tin/lead alloy powder contained 40% tin and 60% lead and had a particle size specification such that all particles were smaller than #180 mesh and between 70% and 85% passed through a #325 mesh sieve.

In evaluating the final emulsion paste product from this Example in the manner described in Example 1, it was found that the addition of the tin/lead alloy powder greatly improved the lubrication of the unsoldered joint between the parts being soldered so greatly facilitating their adjustment into a desired relative orientation.

It was also found that the tin/lead powder was somewhat effective in reducing corrosion of the unsoldered joint when compared to fluxes not containing such tin/lead alloy powder. The flux paste was applied to the joint to be soldered which was then left to stand at room temperature. No corrosion of the unsoldered joint was noted after 5 days.

Example 10

| Component A | |
| --- | --- |
| Mineral oil | 6% |
| Glyceryl monstearate | 5% |
| Promulgen D | 5% |
| Lanolin | 0.5% |
| Component B | |
| Water | 58.5% |
| Component C | |
| Zinc chloride | 23% |
| Lead powder | 2% |

The lead powder had a particle size distribution with all particles smaller than #180 mesh and at least 80% smaller than #325 mesh.

In evaluating the final emulsion paste product from this Example in the manner described in Example 1, it was found that the addition of the lead powder greatly improved the lubrication of the unsoldered joint between the parts being soldered so greatly facilitating their adjustment into a desired relative orientation.

It was, however, noted that the lead powder was not effective in reducing corrosion of the unsoldered joint.

Example 11

| Component A | |
| --- | --- |
| Mineral oil | 6% |
| Glyceryl monostearate | 4% |
| Stearyl alcohol | 4% |
| Cetearyl alcohol | 3% |
| Propylene glycol | 1.5% |
| Lanolin anhydride | 0.5% |
| Component B | |
| Water | 70% |
| Component C | |
| Triethylamine hydrochloride | 11% |

This flux composition proved to be highly effective in "tinning" a moderately oxidized copper surface. After such "tinning", the flux residues were easily removed by rinsing with water.

Example 12

| Component A | |
|---|---|
| Mineral oil | 6% |
| Glyceryl monostearate | 4% |
| Stearyl alcohol | 4% |
| Cetearyl alcohol | 3% |
| Propylene glycol | 1.5% |
| Lanolin anhydride | 0.5% |
| Component B | |
| Water | 76% |
| Component C | |
| Oleic acid | 5% |

This flux composition was used with effective results in soldering the lead trim strips separating the various glass panels of a stained glass window. After the soldering was complete, the flux residues were easily removed by rinsing with water.

Example 13

A liquid flux was prepared using the following components.

| Component A | |
|---|---|
| Mineral oil | 2% |
| Glyceryl monostearate | 1.67% |
| Stearyl alcohol | 1.33: |
| Emulgade 1000 NI | 1% |
| Propylene glycol | 0.33% |
| Component B | |
| Water | 73.67% |
| Component C | |
| Zinc chloride | 20% |

Component B and Component C were added simultaneously with thorough mixing to Component A, after first heating Components A and B to 85°C. The resulting liquid emulsion was allowed to cool to room temperature.

This particular composition was evaluated in the soldering of an automobile radiator core. For such evaluation, the radiator core was first heated to 200°C, then sprayed with the flux composition. The solder was then applied and, after cooling, the radiator core was rinsed thoroughly with water. No signs of surface corrosion were visible many days after such rinsing. Additionally, it was found that the extent to which the core needed to be rinsed to obtain an acid-free wash water was much less than that which was the case using previously known liquid fluxes.

## Claims

1. A soldering flux composition comprising a fluxing agent capable of removing oxide from a metal surface to be soldered and characterized in that said composition comprises a water-soluble oil-in-water emulsion in turn comprising:

(a) from about 1% to about 10% by weight of an oil type material,

10

(b) from about 1% to about 20% by weight of at least one non-ionic emulsifying agent,

(c) from about 40% to about 96% by weight of water, and

(d) from about 2% to about 35% by weight of said fluxing agent.

2. A soldering flux composition as claimed in Claim 1 and characterized in that said oil type material is selected from the class consisting of mineral oils and waxes, vegetable and seed oils, animal oils, fish oils, petrolatum, waxes and petroleum jelly.

3. A soldering flux composition as claimed in Claim 2 and characterized in that said fluxing agent is selected from the class consisting of inorganic halides, organic halogen compounds and organic acids.

4. A soldering flux composition as claimed in Claim 3 and characterized in that said fluxing agent is selected from the class consisting of ammonium chloride, magnesium chloride, zinc chloride, zinc bromide, zinc iodide, sodium chloride, sodium bromide and potassium iodide.

5. A soldering flux composition as claimed in Claim 4 and characterized in that said fluxing agent is selected from the class consisting of zinc chloride and zinc bromide.

6. A soldering flux composition as claimed in Claim 5 and characterized in that said fluxing agent is zinc chloride.

7. A soldering flux composition as claimed in Claim 5 and characterized in that said fluxing agent is zinc bromide.

8. A soldering flux composition as claimed in Claim 2 and characterized in that said emulsion comprises from about 10% to about 25% by weight of said fluxing agent.

9. A soldering flux composition as claimed in Claim 8 characterized in that said composition is in paste form, is intended primarily for plumbing and metal fabricating applications and in that said emulsion comprises from about 4% to about 6% by weight of said oil type material, from about 6% to about 12% by weight of said emulsifying agent and from about 60% to about 80% by weight water.

10. A soldering flux composition as claimed in Claim 9 and characterized in that said emulsion also comprises from about 0.5% to about 2% by weight of a powdered metal selected from the class consisting of tin, lead and alloys thereof with each other or with minor amounts of other metals, said powdered metal having at least 70% by weight of the particles thereof smaller than #325 mesh.

11. A soldering flux composition as claimed in Claim 10 and characterized in that said powdered metal is powdered tin.

12. A soldering flux composition as claimed in Claim 8 characterized in that said said composition is in liquid form, is intended primarily for electrical and metal fabricating applications and in that said emulsion comprises from about 1% to about 2% by weight of said oil type material, from about 1% to about 2% by weight of said emulsifying agent and from about 90% to about 96% by weight water.

13. A soldering flux composition as claimed in Claim 12 and characterized in that said fluxing agent is selected from the class consisting of organic acids and organic halogen compounds.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 925 112 (A. PETERSEN, Sr. et al.) <br> * Whole document * <br> --- | 1-3,8-13 | B 23 K 35/363 |
| X | US-A-3 073 270 (P.D. JOHNSON et al.) <br> * Whole document * <br> --- | 1,2,9-11 | |
| X | FR-A-2 529 125 (D. LA FORGE) <br> * Page 1; claims * <br> --- | 1,3-8 | |
| A | US-A-2 895 862 (H.B. LAUDENSLAGER, Jr.) <br> --- | | |
| A | US-A-2 480 723 (R.J. EVANS et al.) <br> ----- | | |

**TECHNICAL FIELDS SEARCHED (Int. Cl.5)**

B 23 K

The present search report has been drawn up for all claims

| Place of search | Date of completion of the search | Examiner |
|---|---|---|
| THE HAGUE | 08-05-1990 | MOLLET G.H.J. |

EPO FORM 1503 03.82 (P0401)